# EUROPÄISCHE PATENTANMELDUNG

(11) **EP 3 550 172 A1**
(43) Veröffentlichungstag der Anmeldung: **09.10.2019**
(21) Anmeldenummer: 19161170.6
(22) Anmeldetag: 07.03.2019
(51) Int. Cl.: F16F 1/26, B60G 11/113, B60G 17/02, F16F 1/368

(54) **BLATTFEDERHALTERUNG ZUM VERBINDEN EINER BLATTFEDER MIT EINER ACHSE UND FAHRWERK MIT EINER SOLCHEN BLATTFEDERHALTERUNG**

(30) Priorität: 06.04.2018 DE 102018205220
(71) Anmelder: ZF Friedrichshafen AG, 88046 Friedrichshafen (DE)
(72) Erfinder: Hacker, Clemens, 49074 Osnabrück (DE)

(57) **Zusammenfassung**

Die Erfindung betrifft eine Blattfederhalterung (1) zum Verbinden einer Blattfeder (9) mit einer Achse (4), mit einer ersten Befestigungseinrichtung (2) und einer zweiten Befestigungseinrichtung (3), wobei aufgrund eines Zusammenwirkens der ersten Befestigungseinrichtung (2) mit der zweiten Befestigungseinrichtung (3) ein erstes Lager (10) und ein von dem ersten Lager (10) beabstandetes zweites Lager (11) zum Lagern der Blattfeder (9) zwischen der ersten Befestigungseinrichtung (2) und der zweiten Befestigungseinrichtung (3) realisiert sind, und das Zusammenwirken der ersten Befestigungseinrichtung (2) und der zweiten Befestigungseinrichtung (3) eine Verformung eines Blattfederabschnittes (13) der Blattfeder (9) zwischen dem ersten Lager (10) und dem zweiten Lager (11) ermöglicht. Um die Steifigkeit abhängig vom Federweg zu erhöhen und/oder eine progressive Federung zu realisieren, ist die Blattfederhalterung (1) gekennzeichnet durch eine Anschlagsfläche (15) zum Begrenzen der Verformung des Blattfederabschnittes (13).

## Beschreibung

Die Erfindung betrifft eine Blattfederhalterung zum Verbinden einer Blattfeder mit einer Achse, mit einer ersten Befestigungseinrichtung und einer zweiten Befestigungseinrichtung, wobei aufgrund eines Zusammenwirkens der ersten Befestigungseinrichtung mit der zweiten Befestigungseinrichtung ein erstes Lager und ein von dem ersten Lager beabstandetes zweites Lager zum Lagern der Blattfeder zwischen der ersten Befestigungseinrichtung und der zweiten Befestigungseinrichtung realisiert sind, und das Zusammenwirken der ersten Befestigungseinrichtung und der zweiten Befestigungseinrichtung eine Verformung eines Blattfederabschnittes der Blattfeder zwischen dem ersten Lager und dem zweiten Lager ermöglicht. Des Weiteren betrifft die Erfindung ein Fahrwerk mit einer solchen Blattfederhalterung.

Eine derartige Blattfederhalterung ist aus der WO 2017/027516 A1 bekannt. Hierbei ist die Blattfeder als eine Einblattfeder aus einem Faserkunststoffverbund ausgebildet. Blattfedern aus einem Faserkunststoffverbund, insbesondere einem Glasfaserkunststoff, bieten ein hohes Gewichteinsparpotential im Vergleich zu Blattfedern aus Metall. Allerdings besteht bei Blattfedern aus einem Faserkunststoffverbund oder einem Glasfaserkunststoff die Gefahr einer Beschädigung, wenn beispielsweise Schmutzpartikel auf der Oberfläche der Blattfeder reiben. Hierdurch wird der Einsatz von Blattfedern aus mehreren Blättern erschwert, wenn die Blattfedern aus einem Faserkunststoffverbund oder Glasfaserkunststoff gebildet sein sollen.

Bei Blattfedern aus Metall ist es bekannt, diese aus mehreren Blättern zu bilden, wobei mindestens eines dieser Blätter erst ab einem bestimmten bzw. vorgegebenen Federweg eingreift oder wirkt, wodurch die Steifigkeit der Blattfeder erhöht wird. Eine derartige sich erhöhende Steifigkeit der Blattfeder und/oder progressive Federung wird beispielsweise für Fahrzeuge bestimmter Gewichtsklassen oder Fahrzeuge mit hoher Zuladung gefordert. Hierdurch kann eine nahezu gleichbleibende Aufbaueigenfrequenz gewährleistet werden, die die Fahrsicherheit erhöht. Bei einer mehrblättrigen Ausbildung einer Blattfeder aus einem Faserkunststoffverbund, insbesondere einem Glasfaserkunststoff, besteht aufgrund beispielsweise eindringender Schmutzpartikel und/oder einem Abrieb zwischen den Blättern der Blattfeder, die Gefahr einer Beschädigung. Somit ist eine sich erhöhende Steifigkeit und/oder eine progressive Federung bei einer mehrblättrigen Blattfeder aus einem Faserkunststoffverbund, insbesondere Glasfaserkunststoff, nicht ohne Weiteres realisierbar.

Es ist die der Erfindung zu Grunde liegende Aufgabe, eine Blattfederhalterung und/oder ein Fahrwerk der eingangs genannten Art derart weiterzuentwickeln, dass die Steifigkeit abhängig vom Federweg erhöht und/oder eine progressive Federung realisierbar ist. Insbesondere soll eine alternative Ausführungsform bereitgestellt werden.

Die der Erfindung zu Grunde liegende Aufgabe wird mit einer Blattfederhalterung nach Anspruch 1 und mittels eines Fahrwerks nach Anspruch 14 gelöst. Bevorzugte Weiterbildungen der Erfindung finden sich in den Unteransprüchen und in der nachfolgenden Beschreibung.

Die Blattfederhalterung ist zum Verbinden einer Blattfeder mit einer Achse ausgebildet. Hierbei kann die Achse als eine Starrachse und/oder eine Radachse ausgebildet sein. Insbesondere erstreckt sich die Achse quer oder rechtwinklig zu einer Fahrzeuglängsachse. Die Blattfederhalterung weist eine erste Befestigungseinrichtung und eine zweite Befestigungseinrichtung auf. Hierbei wirkt die erste Befestigungseinrichtung mit der zweiten Befestigungseinrichtung zusammen. Aufgrund dieses Zusammenwirkens sind ein erstes Lager und ein von dem ersten Lager beabstandetes zweites Lager realisiert. Aufgrund des ersten Lagers und des zweiten Lagers kann bzw. ist die Blattfeder zwischen der ersten Befestigungseinrichtung und der zweiten Befestigungseinrichtung gelagert. Insbesondere ist die Blattfeder aufgrund des ersten Lagers und des zweiten Lagers fest mit der Blattfederhalterung verbunden. Vorzugsweise ist die Blattfeder aufgrund der Lagerung der Blattfeder an der Blattfederhalterung in Bezug zu der Blattfederhalterung und in Richtung einer Längserstreckung der Blattfeder fest bzw. unbeweglich gehalten. Die erste Befestigungseinrichtung und die zweite Befestigungseinrichtung sind derart ausgebildet, dass aufgrund des Zusammenwirkens der ersten Befestigungseinrichtung und der zweiten Befestigungseinrichtung eine Verformung eines Blattfederabschnittes der Blattfeder ermöglicht ist. Dieser Blattfederabschnitt der Blattfeder ist zwischen dem ersten Lager und dem zweiten Lager angeordnet. Insbesondere ist der Blattfederabschnitt zwischen der ersten Befestigungseinrichtung und der zweiten Befestigungseinrichtung angeordnet. Die Blattfederhalterung weist eine Anschlagsfläche zum Begrenzen der Verformung des Blattfederabschnittes auf.

Hierbei ist von Vorteil, dass aufgrund der Anschlagsfläche, die die Verformung des Blattfederabschnittes begrenzt, die Federeigenschaften der Blattfeder in Abhängigkeit vom Federweg und/oder einer Federbelastung veränderbar sind.

Unter einer Verformung kann eine Torsion und/oder eine Biegung verstanden werden. Die Verformung kann elastisch sein. Insbesondere ist die Verformung in eine Richtung quer oder rechtwinklig zur Längserstreckung der Blattfeder gerichtet. Vorzugsweise findet die Verformung in einer Ebene statt, in der sowohl die erste Befestigungseinrichtung als auch die zweite Befestigungseinrichtung liegen.

Aufgrund des ersten Lagers und des zweiten Lagers ist die Blattfeder, insbesondere in einem unbelasteten Zustand, nicht mittig, sondern außermittig mit der Achse verbunden. Hierdurch kann sich die Blattfeder, insbesondere der Blattfederabschnitt, zwischen den beiden Lagern verformen, vorzugsweise durchbiegen. Insbesondere bei einer Einfederbewegung verringert sich ein Abstand des Blattfederabschnittes zu der Anschlagsfläche, bis der Blattfederabschnitt schließlich an der Anschlagsfläche anliegt und eine weitere Verformung, insbesondere Durchbiegung, der Blattfeder verhindert bzw. blockiert. Hierdurch kann eine effektive Schenkellänge der Blattfeder und/oder ein federnder Anteil der Blattfeder verringert werden.

Der unbelastete Zustand der Blattfeder kann sich auf einen unmontierten Zustand der Blattfederhalterung bezüglich der Montage in einem Fahrwerk und/oder Fahrzeug beziehen. Alternativ kann sich der unbelastete Zustand der Blattfeder auf einen in einem Fahrzeug und/oder Fahrwerk montierten Zustand der Blattfederhalterung beziehen, wobei auf die Blattfeder eine Federbelastung wirkt, die maximal der Federbelastung in einem Leerzustand oder in einem unbeladenen Zustand des Fahrzeugs oder unterhalb einer vorgegebenen Federbelastung entspricht.

Vorzugsweise wird mittels der Anschlagsfläche eine die Steifigkeit der Blattfeder erhöhende Federung und/oder eine progressive Federung realisierbar oder realisiert. Insbesondere ist mittels der Anschlagsfläche die Verformung des Blattfederabschnittes zwischen der ersten Befestigungseinrichtung und der zweiten Befestigungseinrichtung und/oder in einer Richtung quer zur Längserstreckung des Blattfederabschnittes begrenzt.

Gemäß einer Weiterbildung lässt das Zusammenwirken der ersten Befestigungseinrichtung mit der zweiten Befestigungseinrichtung die Verformung des Blattfederabschnittes bis zu einer vorgegebenen Federbelastung zu. Insbesondere bewirkt eine Federbelastung eine Einfederung und/oder eine Einfederbewegung der Blattfeder. Aufgrund der Einfederbewegung, insbesondere bis zum Erreichen der vorgegebenen Federbelastung, wird der Blattfederabschnitt von der ersten Befestigungseinrichtung weg in Richtung der zweiten Befestigungseinrichtung verformt, insbesondere gebogen. Vorzugsweise ist eine weitere Verformung des Blattfederabschnittes bei einer wirkenden Federbelastung, die der vorgegebenen Federbelastung entspricht und/oder größer als die vorgegebene Federbelastung ist, mittels der Anschlagsfläche blockiert und/oder verhindert. Insbesondere wirkt die Federbelastung ausgehend von der Achse und/oder der ersten Befestigungseinrichtung in Richtung der zweiten Befestigungseinrichtung.

Nach einer weiteren Ausführungsform erstreckt sich der Blattfederabschnitt zwischen dem ersten Lager und dem zweiten Lager. Hierbei kann die Blattfeder an dem ersten Lager und/oder dem zweiten Lager zwischen der ersten Befestigungseinrichtung und der zweiten Befestigungseinrichtung geklemmt sein. Insbesondere ist die erste Befestigungseinrichtung und/oder die zweite Befestigungseinrichtung U-förmig ausgebildet. Hierbei können die Schenkel der U-Formen der beiden Befestigungseinrichtungen einander zugewandt sein und zum Ausbilden der beiden Lager dienen. Vorzugsweise sind die erste Befestigungseinrichtung und/oder die zweite Befestigungseinrichtung, insbesondere im Wesentlichen, starr und/oder unelastisch ausgebildet. Das erste und/oder das zweite Lager ein Elastomerlager aufweisen. Somit kann die Blattfeder unter Zwischenschaltung eines Elastomerlagers zwischen der ersten Befestigungseinrichtung und der zweiten Befestigungseinrichtung geklemmt sein. Das Elastomerlager kann eine rotatorische und/oder translatorische Bewegung der Blattfeder und/oder des Blattfederabschnittes im Bereich des ersten Lagers bzw. zweiten Lagers begünstigen und/oder ermöglichen. Das Elastomerlager kann jeweils eine erste Elastomerlage und mindestens eine weitere Elastomerlage aufweisen. Insbesondere ist die erste Elastomerlage zwischen der Blattfeder und der ersten Befestigungseinrichtung angeordnet. Hierbei liegt die erste Elastomerlage einerseits an der ersten Befestigungseinrichtung und andererseits an der Blattfeder an. Die weitere Elastomerlage kann zwischen der Blattfeder und der zweiten Befestigungseinrichtung angeordnet sein. Hierbei kann die weitere Elastomerlage einerseits an der Blattfeder und andererseits an der zweiten Befestigungseinrichtung anliegen. Aufgrund des Elastomerlagers ist ein Eindringen und/oder eine Beschädigung aufgrund von Schmutzpartikeln und/oder eines Abriebes im Bereich des ersten Lagers bzw. des zweiten Lagers verhindert.

Gemäß einer Weiterbildung weist die Blattfeder mindestens eine Materialverdickung zum Verhindern eines Durchrutschens der Blattfeder in Richtung der Längserstreckung der Blattfeder auf. Somit kann die Blattfeder einen Abschnitt oder mehrere Abschnitte aufweisen, die dicker ausgebildet sind als die Bereiche außerhalb der Materialverdickung. Vorzugsweise ist der Blattfederabschnitt als eine Materialverdickung ausgebildet. Insbesondere ist aufgrund der Materialverdickung der Blattfederabschnitt dicker ausgebildet, als ein Bereich der Blattfeder außerhalb des Blattfederabschnittes. Vorzugsweise ist der Blattfederabschnitt aufgrund der Materialverdickung dicker ausgebildet, als ein Abschnitt der Blattfeder im Bereich des ersten Lagers und/oder des zweiten Lagers. Insbesondere erstreckt sich die Materialverdickung quer und/oder rechtwinklig zur Längserstreckung der Blattfeder. In einem montierten Zustand der Blattfederhalterung in einem Fahrzeug kann sich die Materialverdickung in vertikaler Richtung erstrecken. Vorzugsweise stößt die Materialverdickung an das erste Lager und/oder das zweite Lager an. Aufgrund der Ausbildung des Blattfederabschnittes als eine Materialverdickung kann ein Durchrutschen der Blattfeder in Richtung der Längserstreckung der Blattfeder bei einwirkenden Längskräften verhindert werden. In diesem Zusammenhang kann das erste Lager und/oder das zweite Lager für den Blattfederabschnitt als eine Art Anschlag dienen. Alternativ oder zusätzlich zu der Ausbildung des Blattfederabschnittes als eine Materialverdickung kann ein an das erste Lager und/oder das zweite Lager anstoßender Abschnitt der Blattfeder als eine Materialverdickung ausgebildet sein, wobei diese Abschnitte außerhalb der beiden Befestigungseinrichtungen angeordnet sind. Insbesondere erstrecken sich die Abschnitte mit den Materialverdickungen zwischen dem ersten Lager und dem nächstliegenden ersten axialen Ende der Blattfeder sowie zischen dem zweiten Lager dem nächstliegenden zweiten axialen Ende der Blattfeder. Vorzugsweise weist die Blattfeder im Bereich des ersten Lagers und/oder des zweiten Lagers eine Materialverdünnung auf, wodurch ein Durchrutschen der Blattfeder in Richtung der Längserstreckung der Blattfeder verhinderbar und/oder blockierbar ist.

Gemäß einer Weiterbildung ist die erste Befestigungseinrichtung zum Befestigen der Blattfederhalterung an der Achse ausgebildet. Die erste Befestigungseinrichtung kann mittels einer formschlüssigen, kraftschlüssigen und/oder stoffschlüssigen Verbindung mit der ersten Achse verbunden sein. Vorzugsweise ist eine Relativbewegung der Achse in Bezug zu der ersten Befestigungseinrichtung ausgeschlossen bzw. verhindert. In einem montierten Zustand kann die erste Befestigungseinrichtung oberhalb der Achse angeordnet sein. Vorzugsweise ist auch eine Relativbewegung der zweiten Befestigungseinrichtung in Bezug zu der ersten Befestigungseinrichtung und/oder der Achse ausgeschlossen. Insbesondere ist die Anschlagsfläche der zweiten Befestigungseinrichtung zugeordnet. Hierbei kann die Anschlagsfläche als ein integraler Bestandteil der zweiten Befestigungseinrichtung ausgebildet sein. Vorzugsweise ist die Anschlagsfläche der ersten Befestigungseinrichtung und/oder dem Blattfederabschnitt zugewandt. In einem montierten Zustand kann die zweite Befestigungseinrichtung oberhalb der ersten Befestigungseinrichtung angeordnet sein

Vorzugsweise ist die Anschlagsfläche zwischen dem ersten Lager und dem zweiten Lager angeordnet. Hierbei kann sich die Anschlagsfläche vom ersten Lager zum zweiten Lager erstrecken. Insbesondere kann sich die Anschlagsfläche in Richtung der Längserstreckung der Blattfeder und/oder des Blattfederabschnittes erstrecken. Die Anschlagsfläche kann eben, gebogen, einteilig oder mehrteilig ausgebildet sein. Beispielsweise kann die Anschlagsfläche konvex oder konkav gebogen ausgebildet sein. Des Weiteren kann die Anschlagsfläche, die erste Befestigungseinrichtung und/oder die zweite Befestigungseinrichtung aus einem Metall gebildet sein.

Gemäß einer Weiterbildung kann die zweite Befestigungseinrichtung ein Brückenelement aufweisen. Die Anschlagsfläche kann dem Brückenelement zugeordnet sein bzw. das Brückenelement kann die Anschlagsfläche aufweisen. Insbesondere ist die Anschlagsfläche auf einer Seite des sich vom ersten Lager zum zweiten Lager erstreckenden Brückenelementes angeordnet. Entsprechend kann sich das Brückenelement in Richtung der Längserstreckung der Blattfeder und/oder des Blattfederabschnittes erstrecken. Insbesondere ist das Brückenelement im Wesentlichen steif ausgebildet. Vorzugsweise ist die zweite Befestigungseinrichtung mittels mindestens einem Halteelement, insbesondere mit zwei Halteelementen, mit der ersten Befestigungseinrichtung verbunden. Hierbei kann im Einzelnen das Brückenelement mittels mindestens einem Halteelement oder mit zwei Halteelementen mit der ersten Befestigungseinrichtung verbunden sein. Das Halteelement kann als ein Bügel ausgebildet sein. Des Weiteren kann das Halteelement aus einem Metall oder einem Kunststoff hergestellt sein. Vorzugsweise ist das Halteelement U-förmig ausgebildet. Mittels einer formschlüssigen, kraftschlüssigen und/oder stoffschlüssigen Verbindung kann das Halteelement mit der ersten Befestigungseinrichtung verbunden sein. Die erste Befestigungseinrichtung kann Aufnahmen aufweisen, die eine Aufnahme und/oder Befestigung des Halteelementes ermöglichen. Des Weiteren kann das Halteelement formschlüssig mit der zweiten Befestigungseinrichtung zusammenwirken. Hierzu kann das Halteelement die zweite Befestigungseinrichtung formschlüssig aufnehmen und/oder das Halteelement ist formschlüssig auf und/oder um die zweite Befestigungseinrichtung gesteckt. Hierbei können sich freie Enden des Halteelementes in Richtung der ersten Befestigungseinrichtung und/oder durch die erste Befestigungseinrichtung erstrecken.

Nach einer weiteren Ausführungsform ist auf einer der Anschlagsfläche zugewandten Seite des Blattfederabschnittes eine Elastomerschicht angeordnet. Insbesondere ist die Elastomerschicht fest mit der der Anschlagsfläche zugewandten Seite des Blattfederabschnittes verbunden, beispielsweise verklebt oder aufvulkanisiert. Die Elastomerschicht kann aus einem Gummimaterial gebildet sein. Insbesondere erstreckt sich die Elastomerschicht zwischen dem ersten Lager und dem zweiten Lager. Aufgrund der Elastomerschicht ist die der Anschlagsfläche zugewandte Seite des Blattfederabschnittes vor Schmutzpartikeln und/oder Abrieb geschützt. Die Elastomerschicht kann eine über ihren gesamten Verlauf konstante Dicke aufweisen. Alternativ kann die Elastomerschicht eine konkav oder konvex gebogene Wölbung aufweisen. Des Weiteren kann die Elastomerschicht einlagig oder mehrlagig ausgebildet sein. Gemäß einer alternativen Ausführungsform kann die Elastomerschicht auf einen Abschnitt oder mehrere Abschnitte der der Anschlagsfläche zugewandten Seite des Blattfederabschnittes beschränkt sein. Nach einer weiteren Alternative kann die Elastomerschicht auf der dem Blattfederabschnitt zugewandten Seite der Anschlagsfläche angeordnet sein. Hierbei kann die Elastomerschicht fest mit der dem Blattfederabschnitt zugewandten Seite der Anschlagsfläche verbunden, beispielsweise verklebt oder aufvulkanisiert, sein. In Abhängigkeit von der Ausbildung der Anschlagsfläche und/oder der Elastomerschicht kann die Abhängigkeit der Steifigkeit der Blattfeder von der Federbelastung und/oder einem Federweg je nach Bedarf gestaltet werden.

Vorzugsweise ist die Blattfeder aus einem Kunststoffmaterial, insbesondere einem faserverstärkten Kunststoff oder einem Glasfaserkunststoff, hergestellt. Insbesondere ist die Blattfeder als ein Faserkunststoffverbund realisiert. Die Blattfeder kann als eine Einblattfeder ausgebildet sein. Aufgrund der Anschlagsfläche für das Begrenzen der Verformung des Blattfederabschnittes kann auch bei einer Einblattfeder bzw. einer einblättrigen Blattfeder eine Steifigkeitserhöhung, insbesondere ab einer vorgegebenen Federbelastung, realisiert werden. Hierdurch kann im Vergleich mit einer mehrblättrigen Blattfeder eine Gewichtseinsparung erzielt werden. Vorzugsweise ist die Blattfeder als eine Längsblattfeder ausgebildet. Insbesondere in einem montierten Zustand der Blattfeder und/oder Blattfederhalterung in einem Fahrzeug erstreckt sich somit die Längsblattfeder in Längsrichtung des Fahrzeugs.

Gemäß einer Weiterbildung ist in einem ersten Betriebsmodus unterhalb einer vorgegebenen Federbelastung der Blattfederabschnitt in Richtung der Anschlagsfläche verformbar. Insbesondere ist in dem ersten Betriebsmodus ein freier Spalt zwischen der Anschlagsfläche und dem Blattfederabschnitt realisiert. Vorzugsweise ist der freie Spalt zwischen der Anschlagsfläche und der Elastomerschicht, die auf dem Blattfederabschnitt angeordnet und der Anschlagsfläche zugewandt ist. In dem ersten Betriebsmodus und bis zum Erreichen der vorgegebenen Federbelastung kann sich der Blattfederabschnitt in den Raum des freien Spaltes hinein verformen.

Vorzugsweise ist in einem weiteren Betriebsmodus bei Erreichen und/oder oberhalb einer vorgegebenen Federbelastung eine Verformung des Blattfederabschnittes in Richtung der Anschlagsfläche blockiert. Insbesondere liegt in dem weiteren Betriebsmodus der Blattfederabschnitt teilweise oder vollständig an der Anschlagsfläche an. Vorzugsweise liegt in dem weiteren Betriebsmodus die auf dem Blattfederabschnitt angeordnete und der Anschlagsfläche zugewandte Elastomerschicht teilweise oder vollständig an der Anschlagsfläche an.

Insbesondere ist eine Steifigkeit der Blattfeder in dem ersten Betriebsmodus geringer als in dem weiteren Betriebsmodus. Somit kann die Steifigkeit in Abhängigkeit von der Federbelastung und/oder einem Federweg verändert und/oder erhöht werden. Insbesondere ist hierdurch eine progressive Federung realisierbar. Die vorgegebene Federbelastung zum Wechsel zwischen dem ersten Betriebsmodus und dem weiteren Betriebsmodus kann mittels einer bedarfsweise ausgeführten Anschlagsfläche, einem bedarfsweise ausgeführten Blattfederabschnitt und/oder einer bedarfsweise ausgeführten und der Anschlagsfläche zugewandten Elastomerschicht eingestellt werden. Hierbei kann die bedarfsweise Ausführung der Anschlagsfläche, des Blattfederabschnittes und/oder der Elastomerschicht mittels der Ausbildung der Kontur realisiert sein.

Von besonderem Vorteil ist ein Fahrwerk mit einer erfindungsgemäßen Blattfederhalterung, wobei die Blattfederhalterung eine Blattfeder mit einer Achse verbindet. Insbesondere ist hierbei eine Steifigkeit der Blattfeder in einem ersten Betriebsmodus geringer als in einem weiteren Betriebsmodus. Die Blattfederhalterung und/oder das Fahrwerk kann für ein Fahrzeug, insbesondere ein Kraftfahrzeug, vorgesehen sein und/oder in einem Fahrzeug, insbesondere Kraftfahrzeug, eingebaut sein.

Vorzugsweise ist im Bereich der Blattfederhalterung im ersten Betriebsmodus eine Zwei-Punkt-Lagerung der Blattfeder realisiert. Aufgrund des ersten Lagers und des zweiten Lagers der Blattfederhalterung und der Möglichkeit der Verformung des Blattfederabschnittes im ersten Betriebsmodus zwischen dem ersten Lager und dem zweiten Lager ist die Zwei-Punkt-Lagerung der Blattfeder im Bereich der Blattfederhalterung realisiert.

Für die gesamte Blattfeder kann im ersten Betriebsmodus eine Vier-Punkt-Lagerung oder eine Fünf-Punkt-Lagerung realisiert sein. Insbesondere sind ein erstes axiales Ende der Blattfeder und ein von dem ersten axialen Ende abgewandtes zweites axiales Ende der Blattfeder an einem Fahrzeugrahmen, einem Fahrzeugaufbau und/oder einem Zwischenelement gelagert. Hierdurch ergeben sich zugleich zwei, insbesondere äußere, Lagerungspunkte für die Blattfeder. Das Zwischenelement kann als ein Schäkel ausgebildet sein.

Insbesondere ist in dem weiteren Betriebsmodus eine Ein-Punkt-Lagerung der Blattfeder im Bereich der Blattfederhalterung realisiert. Aufgrund der Anlage des Blattfederabschnittes an der Anschlagsfläche in dem weiteren Betriebsmodus wirkt das Zusammenwirken des Blattfederabschnittes mit der Blattfederhalterung wie ein einzelner weiterer Lagerungspunkt. Hierdurch ist in dem weiteren Betriebsmodus die Ein-Punkt-Lagerung im Bereich der Blattfeder realisiert.

Für die gesamte Blattfeder kann im weiteren Betriebsmodus eine Drei-Punkt-Lagerung oder eine Vier-Punkt-Lagerung realisiert sein. Vorzugsweise ist im weiteren Betriebsmodus eine Lagerung mit einem Lagerungspunkt weniger als im ersten Betriebsmodus realisiert. Hierbei können sich aufgrund der beiden axialen Enden der Blattfeder und deren Lagerung an dem Fahrzeugrahmen oder Fahrzeugaufbau zwei Lagerungspunkte ergeben.

Somit ist aufgrund der Anschlagsfläche und beschränkt auf die Betrachtung im Bereich der Blattfederhalterung ein Wechsel zwischen einer Zwei-Punkt-Lagerung und einer Ein-Punkt-Lagerung der Blattfeder ermöglicht.

Vorzugsweise ist die Blattfederhalterung gemäß allen im Zusammenhang mit dem hier beschriebenen erfindungsgemäßen Fahrwerk erläuterten Ausgestaltungen weitergebildet. Ferner kann das hier beschriebene Fahrwerk gemäß allen im Zusammenhang mit der Blattfederhalterung erläuterten Ausgestaltungen weitergebildet sein.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine Seitenansicht einer erfindungsgemäßen Blattfederhalterung in einem ersten Betriebsmodus,
- Fig. 2: einen ersten Querschnitt der erfindungsgemäßen Blattfederhalterung gemäß Fig. 1,
- Fig. 3: einen weiteren Querschnitt der erfindungsgemäßen Blattfederhalterung gemäß Fig. 1,
- Fig. 4: eine Seitenansicht der erfindungsgemäßen Blattfederhalterung in einem weiteren Betriebsmodus,
- Fig. 5: einen ersten Querschnitt der erfindungsgemäßen Blattfederhalterung gemäß Fig. 4, und
- Fig. 6: einen weiteren Querschnitt der erfindungsgemäßen Blattfederhalterung gemäß Fig. 4.

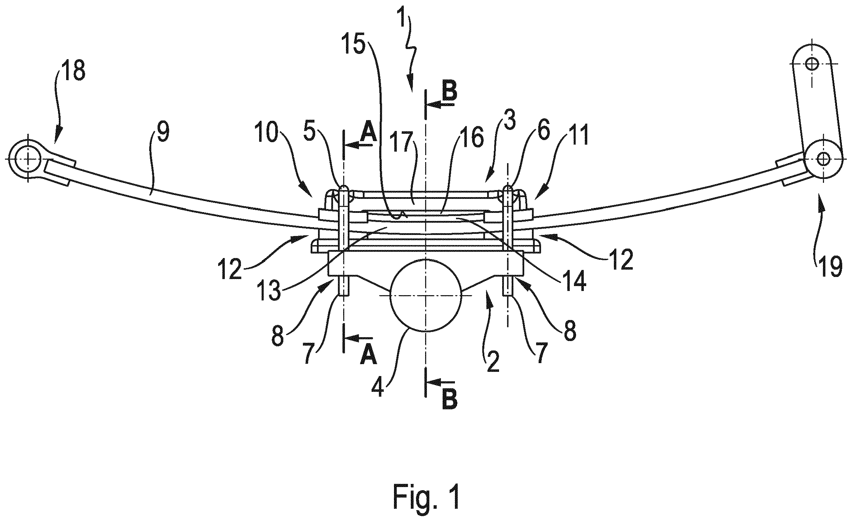

Figur 1 zeigt eine Seitenansicht einer erfindungsgemäßen Blattfederhalterung 1 in einem ersten Betriebsmodus. Die Blattfederhalterung 1 weist eine erste Befestigungseinrichtung 2 und eine zweite Befestigungseinrichtung 3 auf. Die erste Befestigungseinrichtung 2 ist mit einer Achse 4 verbunden. Bei diesem Ausführungsbeispiel ist die Achse 4 als eine Starrachse ausgebildet. In einem hier nicht näher dargestellten fahrzeugmontierten Zustand erstreckt sich die Achse 4 quer bzw. rechtwinklig zur Längsrichtung bzw. Fahrtrichtung des Fahrzeugs. Aufgrund der Verbindung der Achse 4 mit der ersten Befestigungseinrichtung 2 ist eine Relativbewegung der Achse 4 zu der ersten Befestigungseinrichtung 2 ausgeschlossen. Die Verbindung zwischen der Achse 4 und der ersten Befestigungseinrichtung 2 kann beispielsweise als eine Schweißverbindung oder eine Schraubverbindung ausgebildet sein. Bei diesem Ausführungsbeispiel ist die erste Befestigungseinrichtung 2 oberhalb der Achse 4 angeordnet.

Die erste Befestigungseinrichtung 2 ist mit der zweiten Befestigungseinrichtung 3 verbunden. Hierbei ist die zweite Befestigungseinrichtung 3 oberhalb der ersten Befestigungseinrichtung 2 angeordnet. Zum Verbinden der ersten Befestigungseinrichtung 2 mit der zweiten Befestigungseinrichtung 3 weist die Blattfederhalterung 1 Halteelemente 5, 6 auf. Bei diesem Ausführungsbeispiel sind die Halteelemente 5, 6 als U-förmige Bügel ausgebildet. Die Schenkel der Halteelemente 5, 6 umgreifen die zweite Befestigungseinrichtung 3 formschlüssig und erstrecken sich in Richtung der ersten Befestigungseinrichtung 2. Die Halteelemente 5, 6 weisen freie Enden 7 auf. Die freien Enden 7 der Halteelemente 5, 6 bzw. der Schenkel der U-förmigen Halteelemente 5, 6 erstrecken sich bei diesem Ausführungsbeispiel durch korrespondierend ausgebildete Aufnahmen 8 der ersten Befestigungseinrichtung 2. Bei diesem Ausführungsbeispiel sind die Aufnahmen 8 als Durchgangsöffnungen oder Bohrungen ausgebildet. Mittels einer geeigneten Verbindung, beispielsweise einer Schweißverbindung oder Schraubverbindung, sind die Halteelemente 5, 6 an der ersten Befestigungseinrichtung 2 befestigt. Die Halteelemente 5, 6 sind im Bereich zweier voneinander abgewandter Enden der Blattfederhalterung 1 angeordnet. Des Weiteren sind die Halteelemente 5, 6 in Richtung einer Längserstreckung einer Blattfeder 9 voneinander beabstandet. Die Blattfeder 9 ist zwischen der ersten Befestigungseinrichtung 2 und der zweiten Befestigungseinrichtung 3 aufgenommen bzw. angeordnet. Die Blattfeder 9 ist bei diesem Ausführungsbeispiel als eine Längsblattfeder ausgebildet. Des Weiteren ist die Blattfeder 9 bei dieser Ausführungsform aus einem Faserkunststoffverbund, nämlich einem Glasfaserkunststoff, gebildet. Darüber hinaus ist die Blattfeder 9 als eine Einblattfeder bzw. einblättrig realisiert.

Aufgrund des Zusammenwirkens der ersten Befestigungseinrichtung 2 mit der zweiten Befestigungseinrichtung 3 sind ein erstes Lager 10 und ein zweites Lager 11 realisiert. Das erste Lager 10 und das zweite Lager 11 sind voneinander beabstandet und zum Lagern der Blattfeder 9 zwischen der ersten Befestigungseinrichtung 2 und der zweiten Befestigungseinrichtung 3 ausgebildet. Hierbei ist das erste Lager 10 im Bereich des Halteelementes 5 und das zweite Lager 11 im Bereich des Halteelementes 6 angeordnet. Hierbei sind das erste Lager 10 und das zweite Lager 11 spiegelsymmetrisch zueinander ausgebildet. Alternativ können die beiden Lager 10, 11 unterschiedlich zu der Achse 4 beabstandet sein. Das erste Lager 10 und das zweite Lager 11 weist jeweils ein Elastomerlager 12 auf. Das Elastomerlager 12 wird anhand der nachfolgenden Figuren noch näher erläutert.

Die Blattfeder 9 weist einen Blattfederabschnitt 13 auf. Der Blattfederabschnitt 13 ist zwischen dem ersten Lager 10 und dem zweiten Lager 11 angeordnet. Bei diesem Ausführungsbeispiel weist der Blattfederabschnitt 13 zumindest eine Materialverdickung auf, wodurch der Blattfederabschnitt 13 dicker ist, als ein Abschnitt der Blattfeder 9 im Bereich der beiden Lager 10, 11 und/oder außerhalb des Blattfederabschnittes 13. Hierbei erstreckt sich die Materialverdickung gemäß diesem Beispiel in vertikaler Richtung. Des Weiteren stößt die Materialverdickung bzw. der Blattfederabschnitt 13 einerseits an das Elastomerlager 12 des ersten Lagers 10 und andererseits an das Elastomerlager 12 des zweiten Lagers 11 an. Hierdurch ist ein Durchrutschen der Blattfeder 9 bzw. des Blattfederabschnittes 13 in Richtung der Längserstreckung der Blattfeder 9 verhindert bzw. blockiert.

Auf einer der zweiten Befestigungseinrichtung 3 zugewandten Seite weist der Blattfederabschnitt 13 eine Elastomerschicht 14 auf. Bei diesem Ausführungsbeispiel erstreckt sich die Elastomerschicht 14 von dem ersten Lager 10 bis zum zweiten Lager 11. Hier liegt die Elastomerschicht 14 einerseits an dem Elastomerlager 12 des ersten Lagers 10 und andererseits an dem Elastomerlager 12 des zweiten Lagers 11 an. Bei dieser Ausführungsvariante weist die Elastomerschicht 14 über ihren gesamten Verlauf eine konstante Dicke auf. Die Elastomerschicht 14 ist fest mit der eine Anschlagsfläche 15 zugewandten Seite des Blattfederabschnittes 13 verbunden.

Die zweite Befestigungseinrichtung 3 weist die Anschlagsfläche 15 auf. Die Anschlagsfläche 15 ist dem Blattfederabschnitt 13 bzw. der Elastomerschicht 14 zugewandt. In dem hier dargestellten ersten Betriebsmodus ist zwischen der Anschlagsfläche 15 und dem Blattfederabschnitt 13 bzw. der Elastomerschicht 14 ein freier Spalt 16 ausgebildet.

Die zweite Befestigungseinrichtung 3 weist ein Brückenelement 17 auf. Das Brückenelement 17 erstreckt sich von dem ersten Lager 10 zum zweiten Lager 11. Die Anschlagsfläche 15 ist auf einer Seite des Brückenelementes 17 angeordnet, die der ersten Befestigungseinrichtung 2 zugewandt ist.

Die Blattfeder 9 weist ein erstes axiales Ende 18 und ein von dem ersten axialen Ende 18 abgewandtes zweites axiales Ende 19 auf. Mittels der beiden axialen Enden 18, 19 ist die Blattfeder 9 an einem hier nicht näher dargestellten Fahrzeugrahmen oder einem Fahrzeugaufbau lagerbar. Somit ist die Blattfeder 9 in dem ersten Betriebsmodus zum einen im Bereich des ersten axialen Endes 18 und im Bereich des zweiten axialen Endes 19 gelagert. Zusätzlich ist die Blattfeder 9 im Bereich des ersten Lagers 10 und des zweiten Lagers 11 gelagert. Somit ist bezogen auf die Blattfederhalterung 1 in dem ersten Betriebsmodus eine Zwei-Punkt-Lagerung der Blattfeder 9 realisiert.

Bei diesem Ausführungsbeispiel ist das erste axiale Ende 18 unmittelbar und gelenkig mit einem Fahrzeugrahmen oder Fahrzeugaufbau verbindbar. Das zweite axiale Ende 19 ist hier über ein Zwischenelement mit einem Fahrzeugrahmen oder Fahrzeugaufbau verbindbar. Das Zwischenelement kann als ein sogenannter Schäkel ausgebildet sein. Ein erstes Ende des Zwischenelementes ist gelenkig mit dem zweiten axialen Ende 19 verbunden. Ein von dem ersten Ende abgewandtes zweites Ende des Zwischenelementes ist gelenkig mit einem Fahrzeugrahmen oder Fahrzeugaufbau verbindbar. Mittels des Zwischenelementes kann eine Längenänderung der Blattfeder 9 beim Einfedern und/oder Ausfedern kompensiert werden.

Bei einer Einfederung der Achse 4 in vertikaler Richtung wird der Blattfederabschnitt 13 zwischen dem ersten Lager 10 und dem zweiten Lager 11 verformt. Im Einzelnen wird hierbei der Blattfederabschnitt 13 zwischen dem ersten Lager 10 und dem zweiten Lager 11 in Richtung der Anschlagsfläche 15 gebogen. Hierbei erfolgt die Verformung bzw. die Biegung des Blattfederabschnittes 13 in den Bereich des freien Spaltes 16 hinein.

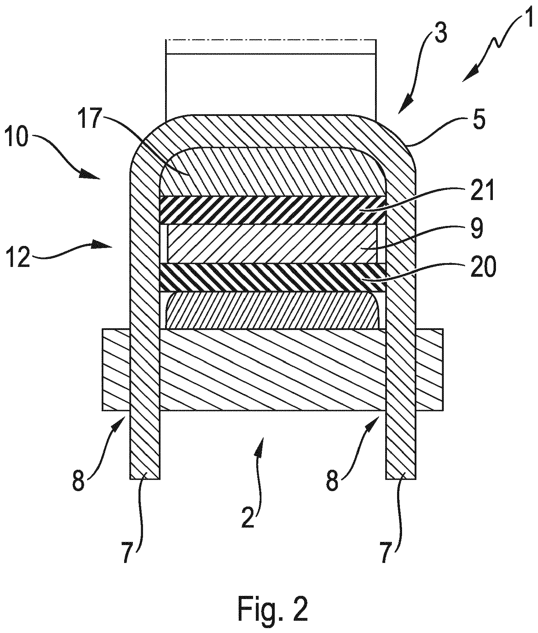

Figur 2 zeigt einen ersten Querschnitt A-A der erfindungsgemäßen Blattfederhalterung 1 gemäß Figur 1. Bei diesem Ausführungsbeispiel weist das Elastomerlager 12 eine erste Elastomerlage 20 und eine weitere Elastomerlage 21 auf. Die erste Elastomerlage 20 ist zwischen der Blattfeder 9 und der ersten Befestigungseinrichtung 2 angeordnet. Hierbei liegt die erste Elastomerlage 20 einerseits an der Blattfeder 9 und andererseits an einer Seite bzw. Fläche der ersten Befestigungseinrichtung 2 an. Die weitere Elastomerlage 21 ist zwischen der Blattfeder 9 und der zweiten Befestigungseinrichtung 3 angeordnet. Hierbei liegt die weitere Elastomerlage 21 einerseits an der Blattfeder 9 und andererseits an einer Seite bzw. Fläche der zweiten Befestigungseinrichtung 3 an. Aufgrund dieser Lagerung ist eine beschädigungsfreie Verformung der Blattfeder 9 im Bereich des ersten Lagers 10 bzw. entsprechend im Bereich des zweiten Lagers 11 ermöglicht.

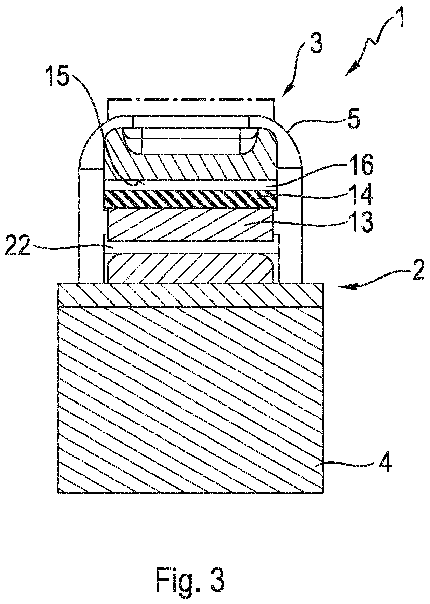

Figur 3 zeigt einen weiteren Querschnitt B-B der erfindungsgemäßen Blattfederhalterung 1 gemäß Figur 1. Gut zu erkennen ist der freie Spalt 16 zwischen der Anschlagsfläche 15 und der Elastomerschicht 14. Im ersten Betriebsmodus kann sich der Blattfederabschnitt 13 bei einer wirkenden Federbelastung und bis zum Erreichen einer vorgegebenen Federbelastung in den Bereich des freien Spaltes 16 hinein verformen bzw. durchbiegen.

Auf einer von der Anschlagsfläche 15 oder der Elastomerschicht 14 abgewandten Seite ist ein Freiraum 22 zwischen dem Blattfederabschnitt 13 und der ersten Befestigungseinrichtung 2 ausgebildet. Dieser Freiraum 22 erstreckt sich gemäß Figur 1 von dem ersten Lager 10 bis zum zweiten Lager 11. Im Einzelnen erstreckt sich der Freiraum 22 zwischen dem Elastomerlager 12 des ersten Lagers 10 und dem Elastomerlager 12 des zweiten Lagers 11. Beim Verformen des Blattfederabschnittes 13 in Richtung der Anschlagsfläche 15 vergrößert sich der Freiraum 22. Insbesondere vergrößert sich der Abstand zwischen dem Blattfederabschnitt 13 und der ersten Befestigungseinrichtung 2.

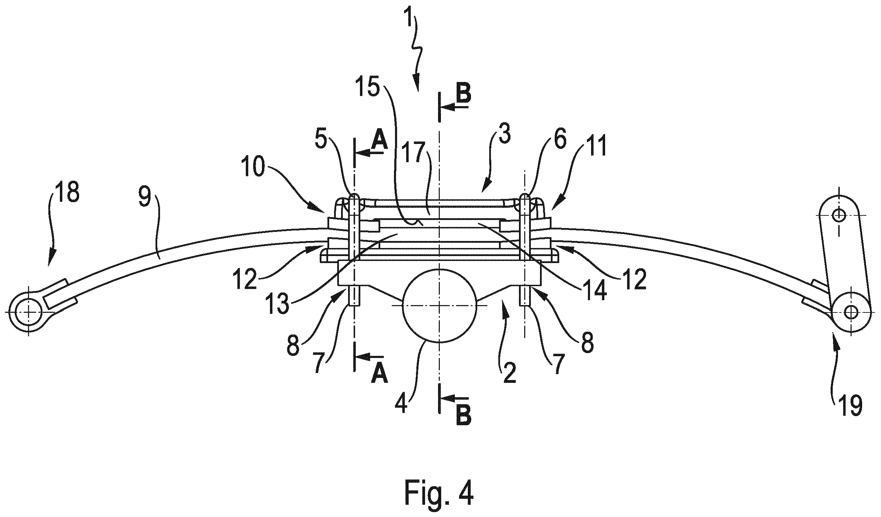

Figur 4 zeigt eine Seitenansicht der erfindungsgemäßen Blattfederhalterung 1 in einem weiteren Betriebsmodus. In dem weiteren Betriebsmodus ist der Blattfederabschnitt 13 derart verformt bzw. verbogen, dass der Blattfederabschnitt 13 bzw. bei diesem Ausführungsbeispiel die Elastomerschicht 14 an der Anschlagsfläche 15 anliegt. Somit ist in dem weiteren Betriebsmodus der freie Spalt gemäß Figuren 1 bis 3 aufgrund der Verformung des Blattfederabschnittes 13 nicht mehr vorhanden bzw. aufgebraucht oder ausgefüllt.

Des Weiteren ist in dem weiteren Betriebsmodus bezogen auf die Blattfederhalterung 1 eine Ein-Punkt-Lagerung der Blattfeder 9 realisiert. Somit bildet die Blattfederhalterung 1 in dem weiteren Betriebsmodus einen einzigen Lagerungspunkt. Zusätzlich ist wie im ersten Betriebsmodus im Bereich der beiden axialen Enden 18, 19 jeweils mindestens eine weitere Lagerstelle realisiert.

Im Vergleich des weiteren Betriebsmodus gemäß Figur 4 mit dem ersten Betriebsmodus gemäß Figuren 1 bis 3 verringert sich die effektive Länge der Blattfeder 9 bzw. der federnde Anteil der Blattfeder 9. Da der Blattfederabschnitt 13 aufgrund der Anlage an der Anschlagsfläche 15 an einer weiteren Verformung gehindert ist, ist die Steifigkeit der Blattfeder 9 in dem weiteren Betriebsmodus im Vergleich zum ersten Betriebsmodus erhöht.

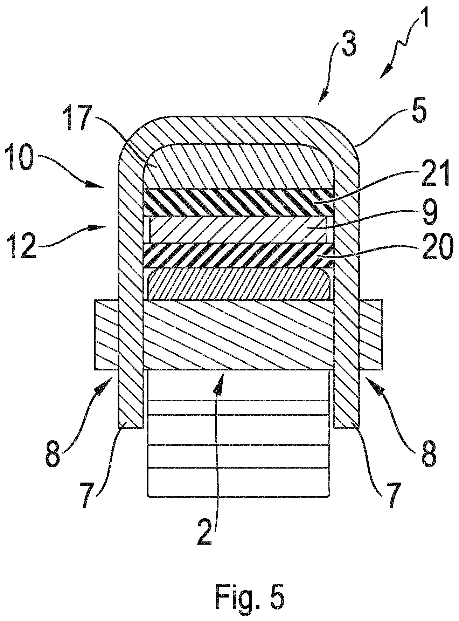

Figur 5 zeigt einen Querschnitt A-A der erfindungsgemäßen Blattfederhalterung 1 gemäß Figur 4. Der Aufbau dieses Querschnitts entspricht im Wesentlichen dem Aufbau gemäß Figur 2. Insoweit wird auch auf die vorangegangene Beschreibung verwiesen.

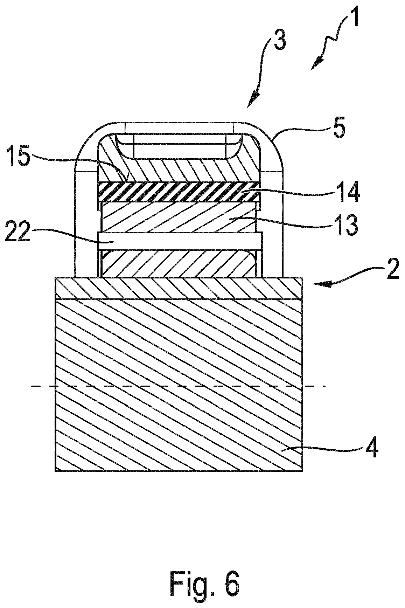

Figur 6 zeigt einen weiteren Querschnitt B-B der erfindungsgemäßen Blattfederhalterung 1 gemäß Figur 4. Gut zu erkennen ist, dass die Elastomerschicht 14 vollflächig an der Anschlagsfläche 15 anliegt und somit der freie Spalt 16 gemäß Figur 3 in dem hier gezeigten weiteren Betriebsmodus vollständig aufgebraucht oder ausgefüllt ist. Des Weiteren ist der Abstand zwischen dem Blattfederabschnitt 13 und der ersten Befestigungseinrichtung 2 und damit der Freiraum 22 in dem weiteren Betriebsmodus im Vergleich zum ersten Betriebsmodus gemäß Figur 3 vergrößert.

### Bezugszeichen

- 1: Blattfederhalterung
- 2: erste Befestigungseinrichtung
- 3: zweite Befestigungseinrichtung
- 4: Achse
- 5: Halteelement
- 6: Halteelement
- 7: freies Ende
- 8: Aufnahme
- 9: Blattfeder
- 10: erstes Lager
- 11: zweites Lager
- 12: Elastomerlager
- 13: Blattfederabschnitt
- 14: Elastomerschicht
- 15: Anschlagsfläche
- 16: freier Spalt
- 17: Brückenelement
- 18: erstes axiales Ende
- 19: zweites axiales Ende
- 20: erste Elastomerlage
- 21: weitere Elastomerlage
- 22: Freiraum

## Patentansprüche

1. Blattfederhalterung zum Verbinden einer Blattfeder (9) mit einer Achse (4), mit einer ersten Befestigungseinrichtung (2) und einer zweiten Befestigungseinrichtung (3), wobei aufgrund eines Zusammenwirkens der ersten Befestigungseinrichtung (2) mit der zweiten Befestigungseinrichtung (3) ein erstes Lager (10) und ein von dem ersten Lager (10) beabstandetes zweites Lager (11) zum Lagern der Blattfeder (9) zwischen der ersten Befestigungseinrichtung (2) und der zweiten Befestigungseinrichtung (3) realisiert sind, und das Zusammenwirken der ersten Befestigungseinrichtung (2) und der zweiten Befestigungseinrichtung (3) eine Verformung eines Blattfederabschnittes (13) der Blattfeder (9) zwischen dem ersten Lager (10) und dem zweiten Lager (11) ermöglicht, **gekennzeichnet durch** eine Anschlagsfläche (15) zum Begrenzen der Verformung des Blattfederabschnittes (13).

2. Blattfederhalterung nach Anspruch 1, **dadurch gekennzeichnet, dass** mittels der Anschlagsfläche (15) eine die Steifigkeit der Blattfeder (9) erhöhende Federung und/oder eine progressive Federung realisierbar ist, insbesondere ist mittels der Anschlagsfläche (15) die Verformung des Blattfederabschnittes (13) zwischen der ersten Befestigungseinrichtung (2) und der zweiten Befestigungseinrichtung (3) und/oder in einer Richtung quer zur Längserstreckung des Blattfederabschnittes (13) begrenzt.

3. Blattfederhalterung nach Anspruch 1 oder 2, **dadurch gekennzeichnet, dass** das Zusammenwirken der ersten Befestigungseinrichtung (2) mit der zweiten Befestigungseinrichtung (3) die Verformung des Blattfederabschnittes (13) bis zu einer vorgegebenen Federbelastung zulässt, insbesondere ist eine weitere Verformung des Blattfederabschnittes (13) bei einer wirkenden Federbelastung, die der vorgegebenen Federbelastung entspricht und/oder größer als die vorgegebene Federbelastung ist, mittels der Anschlagsfläche (15) blockiert.

4. Blattfederhalterung nach einem der vorhergehenden Ansprüche, **dadurch gekennzeichnet, dass** sich der Blattfederabschnitt (13) zwischen dem ersten Lager (10) und dem zweiten Lager (11) erstreckt, insbesondere ist die Blattfeder (9) an dem ersten Lager (10) und dem zweiten Lager (11) zwischen der ersten Befestigungseinrichtung (2) und der zweiten Befestigungseinrichtung (3), vorzugsweise unter Zwischenschaltung eines Elastomerlagers (12), geklemmt.

5. Blattfederhalterung nach einem der vorhergehenden Ansprüche, **dadurch gekennzeichnet, dass** die Blattfeder (9) mindestens eine Materialverdickung zum Verhindern eines Durchrutschens der Blattfeder (9) in Richtung der Längserstreckung der Blattfeder (9) aufweist, vorzugsweise ist der Blattfederabschnitt (13) als eine Materialverdickung ausgebildet, wobei aufgrund der Materialverdickung der Blattfederabschnitt (13) dicker ist als ein Bereich der Blattfeder (9) außerhalb des Blattfederabschnittes (13), insbesondere erstreckt sich die Materialverdickung quer zur Längserstreckung der Blattfeder (9) und/oder in einem montierten Zustand der Blattfederhalterung (1) in einem Fahrzeug in vertikaler Richtung.

6. Blattfederhalterung nach einem der vorhergehenden Ansprüche, **dadurch gekennzeichnet, dass** die erste Befestigungseinrichtung (2) zum Befestigen der Blattfederhalterung (1) an der Achse (4) ausgebildet und die Anschlagsfläche (15) der zweiten Befestigungseinrichtung (3) zugeordnet ist, insbesondere ist die Anschlagsfläche (15) der ersten Befestigungseinrichtung (2) und/oder dem Blattfederabschnitt (13) zugewandt.

7. Blattfederhalterung nach einem der vorhergehenden Ansprüche, **dadurch gekennzeichnet, dass** die Anschlagsfläche (15) zwischen dem ersten Lager (10) und dem zweiten Lager (11) angeordnet ist, insbesondere erstreckt sich die Anschlagsfläche (15) vom ersten Lager (10) zum zweiten Lager (11).

8. Blattfederhalterung nach einem der vorhergehenden Ansprüche, **dadurch gekennzeichnet, dass** die Anschlagsfläche (15) auf einer Seite eines sich vom ersten Lager (10) zum zweiten Lager (11) erstreckenden Brückenelementes (17) der zweiten Befestigungseinrichtung (3) angeordnet ist, insbesondere ist das Brückenelement (17) mittels mindestens einem Halteelement (5, 6) mit der ersten Befestigungseinrichtung (2) verbunden, vorzugsweise ist dem ersten Lager (10) und dem zweiten Lager (11) jeweils ein Halteelement (5, 6) zugeordnet.

9. Blattfederhalterung nach einem der vorhergehenden Ansprüche, **dadurch gekennzeichnet, dass** auf einer der Anschlagsfläche (15) zugewandten Seite des Blattfederabschnittes (13) und/oder auf der dem Blattfederabschnitt (13) zugewandten Seite der Anschlagsfläche (15) eine Elastomerschicht (14) angeordnet ist, insbesondere erstreckt sich die Elastomerschicht (14) zwischen dem ersten Lager (10) und dem zweiten Lager (11).

10. Blattfederhalterung nach einem der vorhergehenden Ansprüche, **dadurch gekennzeichnet, dass** die Blattfeder (9) aus einem Kunststoffmaterial, insbesondere einem faserverstärkten Kunststoff oder einem Glasfaserkunststoff, hergestellt ist, vorzugsweise ist die Blattfeder (9) als eine Einblattfeder und/oder eine Längsblattfeder ausgebildet.

11. Blattfederhalterung nach einem der vorhergehenden Ansprüche, **dadurch gekennzeichnet, dass** in einem ersten Betriebsmodus unterhalb einer vorgegeben Federbelastung der Blattfederabschnitt (13) in Richtung der Anschlagsfläche (15) verformbar ist, insbesondere ist in dem ersten Betriebsmodus ein freier Spalt (16) zwischen der Anschlagsfläche (15) und dem Blattfederabschnitt (13) oder einer auf dem Blattfederabschnitt (13) und der Anschlagsfläche (15) zugewandt angeordneten Elastomerschicht (14) realisiert.

12. Blattfederhalterung nach einem der vorhergehenden Ansprüche, **dadurch gekennzeichnet, dass** in einem weiteren Betriebsmodus bei Erreichen und/oder oberhalb einer vorgegebenen Federbelastung eine Verformung des Blattfederabschnittes (13) in Richtung der Anschlagsfläche (15) blockiert ist, insbesondere liegt in dem weiteren Betriebsmodus der Blattfederabschnitt (13) oder eine auf dem Blattfederabschnitt (13) angeordneten und der Anschlagsfläche (15) zugewandte Elastomerschicht (14) teilweise oder vollständig an der Anschlagsfläche (15) an.

13. Blattfederhalterung nach Anspruch 11 und 12, **dadurch gekennzeichnet, dass** eine Steifigkeit der Blattfeder (9) in dem ersten Betriebsmodus geringer ist als in dem weiteren Betriebsmodus, insbesondere ist die vorgegebene Federbelastung mittels einer bedarfsweise ausgeführten Anschlagsfläche (15), einem bedarfsweise ausgeführten Blattfederabschnitt (13) und/oder einer bedarfsweise ausgeführten und der Anschlagsfläche (15) zugewandten Elastomerschicht (14) einstellbar.

14. Fahrwerk mit einer Blattfederhalterung nach einem der vorhergehenden Ansprüche, wobei die Blattfederhalterung (1) eine Blattfeder (9) mit einer Achse (4) verbindet, **dadurch gekennzeichnet, dass** eine Steifigkeit der Blattfeder (9) in einem ersten Betriebsmodus geringer ist als in einem weiteren Betriebsmodus.

15. Fahrwerk nach Anspruch 14, **dadurch gekennzeichnet, dass** im Bereich der Blattfederhalterung (1) im ersten Betriebsmodus eine Zwei-Punkt-Lagerung der Blattfeder (9) und im weiteren Betriebsmodus eine Ein-Punkt-Lagerung der Blattfeder (9) realisiert ist, insbesondere sind ein erstes axiales Ende (18) der Blattfeder (9) und ein von dem ersten axialen Ende (18) abgewandtes zweites axiales Ende (19) der Blattfeder (9) an einem Fahrzeugrahmen, Fahrzeugaufbau oder einem Zwischenelement gelagert.
